# EUROPÄISCHE PATENTSCHRIFT

(11) **EP 2 781 558 B1**
(45) Veröffentlichungstag und Bekanntmachung des Hinweises auf die Patenterteilung: **14.12.2016**
(21) Anmeldenummer: 13159993.8
(22) Anmeldetag: 19.03.2013
(51) Int. Cl.: C09C 1/30, C01B 33/00, C01B 33/12, C01B 33/159, C07F 7/18, C08K 9/06

(54) **MODIFIZIERTE KIESELSÄURE ENTHALTENDE ZUSAMMENSETZUNG UND DIESE ZUSAMMENSETZUNG ENTHALTENDER SILIKONKAUTSCHUK**
MODIFIED COMPOUND CONTAINING SILICIC ACID AND SILICONE RUBBER CONTAINING THE SAID COMPOSITION
COMPOSITION CONTENANT DE L'ACIDE SILIQUE MODIFIÉ ET CAOUTCHOUC SILICONE CONTENANT CETTE COMPOSITION

(43) Veröffentlichungstag der Anmeldung: 24.09.2014
(73) Patentinhaber: Evonik Degussa GmbH, 45128 Essen (DE)
(72) Erfinder: Scholz, Mario, Dr., 63584 Gründau (DE); Meyer. Jürgen, Dr., 63811 Stockstadt (DE)

(56) Entgegenhaltungen:
- EP-A1- 0 860 478
- EP-A2- 0 251 176
- DATABASE WPI Week 200801 Thomson Scientific, London, GB; AN 2008-A04779 XP002705549, -& JP 2007 217249 A (NIPPON AEROSIL KK) 30. August 2007 (2007-08-30)

## Beschreibung

Die Erfindung betrifft ein Verfahren, bei dem eine hydrophile Kieselsäure mit α,ω-hydroxyterminierten Oligodimethylsiloxanen oberflächenmodifiziert wird. Die Erfindung betrifft weiterhin die so modifizierte Kieselsäure selbst und einen Silikonkautschuk, der diese enthält.

Es sind zahlreiche Verfahren bekannt, bei denen die Oberfläche von Kieselsäuren mit organischen Siliciumverbindungen modifiziert wird.

DE-A-4419234 offenbart ein Verfahren, bei dem eine fluidisierte Kieselsäure bei einer Temperatur von 0 bis 350°C, mit einem Organodimethylsiloxan, welches Dimethylhydroxysiloxy-Einheiten als Endgruppe und eine mittlere Anzahl an Dimethylsiloxyeinheiten von 1 bis 200 aufweist intensiv vermischt. Der Vorgang der Vermischung erfolgt während einer Verweilzeit von 1 Sekunde bis 24 Stunden. Anschließend wird bei einer Temperatur von 0 bis 400°C über einen Zeitraum von 1 Minute bis 48 Stunden nachbehandelt.

In EP-A-1302444 ist ein Verfahren zur Herstellung einer silylierten Kieselsäure offenbart, bei dem eine Kieselsäure mit einem Organodimethylsiloxan, welches Dimethylhydroxysiloxy-Einheiten als Endgruppe aufweisen kann, in einem einzigen Gefäß erfolgt. Das Verfahren umfasst die Schritte der Beladung der Kieselsäure mit Silyliermittel, der Reaktion der Kieselsäure mit dem Silyliermittel und die Reinigung der Kieselsäure von Silyliermittel und Nebenreaktionsprodukten umfasst. Der Transport der Kieselsäure vom ersten zum dritten Schritt erfolgt bevorzugt mittels Schwerkraft. Die Belegung erfolgt bei -30 bis 250°C bei einer Beladungszeit von 1 Minute bis 24 Stunden. Die Reaktion erfolgt bei 40 bis 400°C und einer Reaktionszeit von 5 Minuten bis 48 Stunden. Die Reinigung von Reaktionsnebenprodukten erfolgt bei einer Reinigungstemperatur von 20 bis 350°C.

In EP-A-1304361 ist ein Verfahren zur Herstellung einer silylierten Kieselsäure offenbart, bei dem eine Kieselsäure mit einem Organodimethylsiloxan, welches als Endgruppe Dimethylhydroxysiloxy-Einheiten aufweist, zur Reaktion gebracht wird. Die Reaktion kann in einem Schritt realisiert werden, oder in 2 oder 3 aufeinanderfolgenden Schritten. Das heißt, der Reaktion kann eine Beladung, entspricht einer Physisorption des Organodimethylsiloxanes, vorgeschaltet, sowie der Reaktion ein Reinigungsschritt nachgeschaltet sein. Bevorzugt sind 3 aufeinanderfolgende Schritte, nämlich Beladung, Reaktion und Reinigung. Um eine Oxidation der silylierten Kieselsäure zu vermeiden ist die gesamte Reaktion, umfassend die Schritte der Beladung, Reaktion und Reinigung, in einer Atmosphäre mit weniger als 2,5 Vol.-% Sauerstoff durchzuführen. Die Reaktionstemperaturen liegen bevorzugt bei 200 bis 400°C und die Reaktionszeiten bei 1 Min bis 24 h. Geht ein Beladungsschritt voraus, so liegt die Beladungstemperatur bevorzugt bei -30 bis 350°C. Folgt ein Reinigungsschritt, so liegt die Reinigungstemperatur bevorzugt bei 100 bis 400°C.

In WO2009/077437 wird ein Verfahren offenbart, bei dem man eine Kieselsäure mit einem Organodimethylsiloxan, welches Dimethylhydroxysiloxy-Einheiten als Endgruppe aufweist, unter oxidierenden Bedingungen umsetzt. Das Verfahren umfasst die Belegung der Kieselsäure mit dem Organodimethylsiloxan, die Reaktion und die Reinigung der Kieselsäure von überschüssigen aufgebrachten Verbindungen und Nebenprodukten. Ziel ist die partielle Oxidation der Kieselsäure. Die Belegung erfolgt vorzugsweise bei Temperaturen unter 400°C, bevorzugt von -30 bis 250°C. Die Verweilzeit beträgt vorzugsweise 1 Minute bis 24 Stunden. Die Reaktion erfolgt vorzugsweise bei Temperaturen kleiner 400°C, besonders bevorzugt bei 150 bis 350°C. Die Reinigung erfolgt vorzugsweise bei einer Temperatur von 20 bis 400°C. Die Kieselsäureoberfläche der in WO2009/077437 offenbarten Kieselsäuren ist mit T-Gruppen und D-Gruppen modifiziert.

EP-A-251176 offenbart ein Verfahren zur Oberflächenmodifizierung von Kieselsäure mit einer BET-Oberfläche von 200 m²/g mit einer Organosiliciumverbindung, wobei die Verbindung über endständige Hydroxylgruppen und organische Seitenkomponenten verfügt. Die Modifizierung erfolgt in der Weise, indem die Kieselsäure zuerst mit Organoalkoxysilan und anschliessend mit der Organosiliciumverbindung bei Raumtemperatur während 1 Stunde vorbehandelt und anschliessend thermisch bei einer Temperatur von 150°C während 3 Stunden nachbehandelt wird.

EP-A-860478 offenbart ein Verfahren zur Oberflächenmodifikation von Kieselsäure mittels eines hydroxyterminierten Polysiloxanes. In einem ersten Schritt wird die Partikeloberfläche mit einem Organoalkoxysilan belegt. In einem zweiten Schritt wird unter Inertgasatmosphäre das Polysiloxan zur Kieselsäure gegeben und bei 70°C bis zu maximal 5 Stunden gerührt.

JP-A-2007217249 offenbart ein Verfahren zur Oberflächenmodifikation von Kieselsäure mit einer BET-Oberflache von 5-500 m²/g. Dazu wird die Kieselsäure in einem Behälter vorgelegt und mit einem hydroxyterminierten Organopolysiloxan unter Inertgasatmosphare besprüht. Die Reaktion wird bei einer Temperatur von 300°C während 60 Minuten durchgeführt.

Unter einer T-Gruppe versteht man eine Monoalkyltrisiloxygruppe R-Si(O-)₃. T₁ entspricht R-Si(OR')₂-O-Si, T₂ entspricht R-Si(OR')(-O-Si)₂ und T₃ entspricht R-Si(-O-Si)₃, wobei R ein Si-C-gebundener Alkylrest und R' eine Alkylgruppe oder Wasserstoffatom sein kann.

Unter einer D-Gruppe versteht man eine Dialkyldisiloxygruppe (R-)₂Si(O-)₂. D₁ entspricht Si-O-Si(R₂)OH, D2 entspricht Si-O-SiR₂-OR', D3 entspricht (Si-O)₂SiR₂ und D4 entspricht Si-O-SiR₂-O-SiR₂-O.

Eine Q₂-Gruppe entspricht (HO)₂Si-(O-Si)₂, eine Q₃-Gruppe entspricht (HO)Si-(O-Si)₃ und eine Q₄-Gruppe entspricht Si-(O-Si)₄.

Die im Stand der Technik genannten oberflächenmodifizierten Kieselsäuren sollen als Verstärkerfüllstoff in Silikonkautschuk einsetzbar sein. Ob eine solche Kieselsäure geeignet ist, hängt im wesentlichen davon ab, ob sie in kurzer Zeit in die unvernetzte Silikonmasse eingearbeitet werden kann und ob akzeptable physikalische Werte der vernetzten Silikonmasse erzielt werden können. Wünschenswert ist die Einarbeitung der Kieselsäure im so genannten "cold mixing"-Verfahren, bei dem die Kieselsäure bei Raumtemperatur in den unvernetzten Silikonkautschuk eingearbeitet wird. Gewöhnlich wird die Oberflächenmodifizierung in-situ durchgeführt. Dies bedeutet, dass ein Oberflächenmodifizierungsmittel zusammen mit einem Silikonkautschuk und einer hydrophilen Kieselsäure vermischt wird. Auf diese Art und Weise reagiert die hydrophile Kieselsäure während der Einarbeitung in den Silikonkautschuk mit dem Oberflächenmodifizierungsmittel. Es ist dem Fachmann bekannt, dass bei Einsatz kurzkettiger Hydroxysiloxane, nur dann qualitativ gute, Kieselsäure enthaltende Silikonkautschuke erhalten werden, wenn das in der Reaktion der Hydroxylgruppen der Kieselsäureoberfläche mit dem Hydroxysiloxan gebildete Wasser entfernt wird.

Die technische Aufgabe bestand darin ein Verfahren bereitzustellen, das zu einem kieselsäurehaltigen Produkt führt, welches vorteilhaft in Silikonkautschuken eingesetzt werden kann.

Gegenstand der Erfindung ist ein Verfahren zur Herstellung einer wenigstens eine oberflächenmodifizierte Kieselsäure enthaltenden Zusammensetzung, bei dem man
a) eine hydrophile Kieselsäure mit
b) 5 bis 40, bevorzugt 10 bis 20 Gewichtsanteilen pro 100 Gewichtsanteilen hydrophile Kieselsäure, eines α,ω-hydroxyterminierten [alpha,omega-hydroxyterminierten] Oligodimethylsiloxanes mit einem mittleren Molekulargewicht von 166 bis 800 g/mol, bevorzugt 300 bis 500 g/mol, zunächst in Kontakt bringt, wobei das Inkontaktbringen bei Temperaturen von -10°C bis 50°C erfolgt und
c) nachfolgend das Reaktionsgemisch wenigstens 3 Tage, bevorzugt 1 Woche bis 2 Jahre, bei Temperaturen von -10°C bis 50°C, belässt.

Bei der Zusammensetzung handelt es sich um eine pulverförmige Zusammensetzung.

Das erfindungsgemäße Verfahren zeichnet sich dadurch aus, dass keine Maßnahmen zur Entfernung flüssiger oder gasförmiger Reaktionsprodukte, beispielsweise Wasser, vorgesehen sind. Es wird davon ausgegangen, dass die Hydroxylgruppen des α,ω-hydroxyterminierten Oligodimethylsiloxanes wenigstens teilweise mit den Hydroxylgruppen auf der Oberfläche der Kieselsäure unter Bildung von Wasser reagieren. Es wird ferner davon ausgegangen, dass ein Teil des α,ω-hydroxyterminierten Oligodimethylsiloxanes adsorptiv an die Kieselsäure gebunden ist.

Das Reaktionsgemisch kann bei dem in Schritt c) vorgesehenen Zeitraum im Silo, in einem FIBC (Flexible Intermediate Bulk Container) oder in einem Sack vorliegen.

In Anschluss an Schritt c) des erfindungsgemäßen Verfahrens kann sich noch ein Verdichtungsschritt anschließen. Dies kann beispielsweise durch Walzen erfolgen.

Es ist weiterhin kennzeichnend für das Verfahren, dass der in den Schritten b) und c) genannte Temperaturbereich im Vergleich zum Stand der Technik sehr niedrig ist. Gewöhnlich werden die Schritte b) und c) des erfindungsgemäßen Verfahrens bei Raumtemperatur, also bei 15 bis 25°C, durchgeführt.

Das Inkontaktbringen gemäß Schritt b) erfolgt zweckmäßigerweise durch Verdüsen mittels Ein- oder Mehrstoffdüsen oder mittels Ultraschallverdüsung des α,ω-hydroxyterminierten Oligodimethylsiloxanes auf die fluidisierte Kieselsäure.

In einer Ausführungsform des Verfahrens erfolgt das Inkontaktbringen unter Inertgasatmosphäre. Unter einer Inertgasatmosphäre soll verstanden werden, dass der Anteil an Sauerstoff nicht mehr als 5 Vol.-% beträgt, bevorzugt nicht mehr als 2,5 Vol.-%. Es ist jedoch auch möglich das Inkontaktbringen bei mehr als 5 Vol.-%, beispielsweise in Luft, durchzuführen.

In einer weiteren Ausführungsform des Verfahrens wählt man als Atmosphäre bei der man das Reaktionsgemisch für wenigstens 3 Tage gemäß Schritt c) belässt, eine Atmosphäre, deren Sauerstoffgehalt mehr als 5 Vol.-% beträgt. Bevorzugte Atmosphäre ist Luft.

Bevorzugt wird das Verfahren so ausgeführt, dass das Inkontaktbringen unter Inertgasatmosphäre erfolgt und die Atmosphäre bei der man das Reaktionsgemisch für wenigstens 3 Tage gemäß Schritt c) belässt, Luft ist.

Bei der im Verfahren eingesetzten Kieselsäure handelt es sich um eine hydrophile Kieselsäure. Es können sowohl pyrogen hergestellte Kieselsäuren wie auch Fällungskieselsäuren eingesetzt werden.

Bessere Ergebnisse werden mit pyrogen hergestellten Kieselsäuren erhalten. Unter pyrogen hergestellten Kieselsäuren sind solche zu verstehen, bei der die Kieselsäure durch Flammenhydrolyse oder Flammenoxidation von Siliciumhalogeniden, beispielsweise SiCl₄, erhalten wird. Die Kieselsäure trägt auf ihrer Oberfläche Hydroxylgruppen in Form von Si-OH. Bei den pyrogen hergestellten, hydrophilen Kieselsäuren beträgt die Silanolgruppendichte in der Regel 1,8 bis 2,5, wenn sie durch Reaktion des Siliciumdioxidpulvers mit Lithiumaluminiumhydrid nach der Methode von J. Mathias und G. Wannemacher (Journal of Colloid and Interface Science 125, 1988, 61) bestimmt wird. Die pyrogene, hydrophile Kieselsäure, wie sie im erfindungsgemäßen eingesetzt werden kann, liegt überwiegend in Form von dreidimensionalen Aggregaten von Primärpartikeln vor. Während die Primärpartikel einen Durchmesser von in der Regel 5 bis 50 nm aufweisen können, beträgt der Aggregatdurchmesser bis zu mehreren Mikrometern, üblicherweise 0,5 bis 5 µm.

Die BET-Oberfläche der im Verfahren der vorliegenden Erfindung eingesetzten pyrogenen, hydrophilen Kieselsäure ist bevorzugt 150 bis 400 m²/g, besonders bevorzugt 180 bis 350 m²/g, ganz besonders bevorzugt 220 bis 280 m²/g. Das Stampfgewicht der Kieselsäuren beträgt bevorzugt 20 bis 150 g/l, nach DIN EN ISO 787/11.

Typische Vertreter sind beispielsweise AEROSIL^{®}150, AEROSIL^{®}200, AEROSIL^{®}300 oder AEROSIL^{®}380, alle Evonik Industries.

Das im erfindungsgemäßen Verfahren eingesetzte α,ω-hydroxyterminierte Oligodimethylsiloxan weist ein mittleres Molekulargewicht von 166 bis 800 g/mol, bevorzugt eines von 300 bis 500 g/mol, auf. Bei dem α,ω-hydroxyterminierten Oligodimethylsiloxan handelt es sich in der Regel um Gemische von zwei oder mehr Verbindungen. Tetramethyl-1,3-disiloxanediol kann auch als einzelne Verbindung eingesetzt werden. Bevorzugt ist jedoch ein α,ω-hydroxyterminiertes Oligodimethylsiloxan mit einem mittleren Molekulargewicht von 200 bis 800 g/mol, ganz besonders bevorzugt eines mit einem mittleren Molekulargewicht von 300 bis 500 g/mol. Die dynamische Viskosität beträgt bevorzugt weniger als 50 mPas, besonders bevorzugt 15 bis 45 mPas, und ganz besonders bevorzugt 20 bis 40 mPas, jeweils bei einer Temperatur von 20°C.

In einer besonderen Ausführungsform weist die nach dem erfindungsgemäßen Verfahren hergestellte Zusammensetzung, folgende Merkmale auf:
a) gemäß TEM eine Struktur in Form aggregierter Primärpartikel mit einer BET-Oberfläche von 150 bis 250 m²/g,
b) einen SiO₂-Gehalt von 91,5 bis 96,0 Gew.-% und an C von 2,5 bis 4,0 Gew.-%,
c) im ²⁹Si-HPDEC-NMR-Spektrum ein Verhältnis D/Q von 25:75 bis 40:60 aufweist, wobei
   D die Fläche der Signale der D-Gruppe bei - 90 bis -120 ppm und
   Q die Fläche der Signale der Q-Gruppe bei -10 bis -30 ppm ist,
d) im IR-Spektrum der Quotient E₃₆₆₀/E₁₈₇₀ ≥ 1,3, bevorzugt 1,4 bis 2,0, besonders bevorzugt 1,5 bis 1,8 ist und der Quotient E₃₅₀₀/E₁₈₇₀ ≥ 2,0, bevorzugt 2,0 bis 4,0, besonders bevorzugt 2,5 bis 3,5, ist, wobei
   E₃₆₆₀ der Extinktion der Schwingungsbande bei 3660 cm⁻¹,

   E₃₅₀₀ der Extinktion der Schwingungsbande bei 3500 cm⁻¹ und
   E₁₈₇₀ der Extinktion der Schwingungsbande bei 1870 cm⁻¹, entspricht.

Die Zusammensetzung weist eine besondere kurze Einarbeitungszeit in Silikonkautschuk auf. Sie beträgt weniger als 60 Minuten, bevorzugt 30 bis 50 Minuten. Die Einarbeitungszeit wird bestimmt, indem man 100 Gewichtsteile Rhodorsil^{®} Gomme 751, Bluestar Silicones, CAS-Nr. 68083-18-1, als unvernetzten Silikonkautschuk und 40 Teile der Zusammensetzung in einem Laborkneter LUK-2,5 der Firma Werner und Pfleiderer bei Raumtemperatur, 20 bis 25°C, mischt. Dabei wird die Zusammensetzung in drei Portionen, nämlich zu 60, 25 und 15 Gew.-% der Gesamtmenge, zugegeben, wobei die nachfolgende Zugabe dann erfolgt, wenn die Zusammensetzung nach visueller Beurteilung im unvernetzten Silikonkautschuk aufgenommen ist.

TEM steht für Transmissionselektronenmikroskopie. Die BET-Oberfläche kann nach DIN 66131 und DIN 66132 bestimmt werden.

Die HPDEC (High Power Decoupling) ²⁹Si-NMR-Spektroskopie ist ein Standardverfahren zur Bestimmung des Siliciumanteiles in Festkörpern. T-Gruppen sind in der erfindungsgemäßen Zusammensetzung nicht zu detektieren. Die Bedeutung von D-, Q- und T-Gruppe sind bereits in der Beschreibung genannt. Es wird ein FT-NMR-Spektrometer Avance 400 eingesetzt.

Die IR-Spektren werden an Pulverschichten mittels eines Bruker IFS 85 FT-IR-Spektrometers erhalten. Die zu bestimmende Probe wird auf ein NaCl-Monokristallfenster aufgestäubt. Die Messung wird mit folgenden Parametern durchgeführt: Auflösung: 2 cm⁻¹, Messintervall : 4500 cm⁻¹ bis 100 cm⁻¹, Apodizierungsfunktion: triangular, Anzahl der Scans 128. Die Extinktion wird wie folgt ermittelt: Zur Festlegung der Basislinie werden Tangenten an die Basislinie im Bereich zwischen ca. 3800 cm⁻¹ und ca. 2800 cm⁻¹ sowie im Bereich zwischen ca. 2100 cm⁻¹ und 1750 cm⁻¹ angelegt. Vom Maximum der relevanten Banden 3660, 3500 und 1870 cm⁻¹ wird das Lot auf die Basislinie gefallt und die jeweiligen Höhen vom Maximum zur Basislinie in mm ausgemessen. Es wird davon ausgegangen, dass der Schwingungsbande bei 3660 cm⁻¹ eine verbrückte SiOH-Schwingung und der Schwingungsbande bei 3500 cm⁻¹ eine OH-Schwingung (H₂O + SiOH) zugrunde liegt. Die Extinktion dieser Banden wird normiert, indem durch die Extinktion der der Bande der SiO-Kombinationsschwingung dividiert wird.

Der mittels ²⁹Si-HPDEC-NMR-Spektroskpie ermittelte Quotient D/Q und die normierten Extinktionen E₃₆₆₀/E₁₈₇₀ und E₃₅₀₀/E₁₈₇₀ unterscheiden sich deutlich vom Stand der Technik.

In einer besonderen Ausführungsform weist die Zusammensetzung einen Trocknungsverlust bei 105°C/2 h von 1,0 bis 2,5 Gew.-%, bezogen auf die Zusammensetzung und einen Glühverlust bei 1000°C/2 h, bezogen auf das nach der Trocknung erhaltene Material, von 3,5 bis 6,0 Gew.-% aufweist. Der Trocknungsverlust wird dabei bestimmt nach DIN EN ISO 787/2 und der Glühverlust nach DIN EN ISO 3262-20.

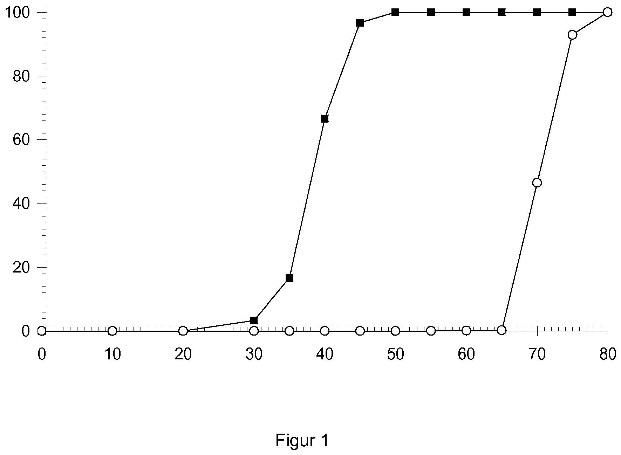

In einer weiteren Ausführungsform beträgt die Methanolbenetzbarkeit der Zusammensetzung weniger als 60%, bevorzugt 25% bis 50%. Die Methanolbenetzbarkeit der erfindungsgemäßen Zusammensetzung ist beispielsweise niedriger, als die der durch Umsetzung der gleichen hydrophilen Kieselsäure und des gleichen α,ω-hydroxyterminierten Oligodimethylsiloxanes, jedoch bei Temperaturen von ca. 200°C erhaltenen Produktes. Bei der Bestimmung der Methanolbenetzbarkeit werden in transparente Zentrifugenröhrchen jeweils 0,2 g (± 0,005 g) Siliciumdioxidpulver eingewogen. Es werden zu jeder Einwaage 8,0 ml eines Methanol/Wasser Gemisches mit jeweils 10, 20, 30, 40, 50, 60, 70 und 80 Vol.-% Methanol zugegeben. Die verschlossenen Röhrchen werden 30 Sekunden geschüttelt und anschließend 5 Minuten bei 2500 min⁻¹ zentrifugiert. Die Sedimentvolumina werden abgelesen, in Prozent umgerechnet und graphisch gegen den Methanolgehalt (Vol.-%) aufgetragen. Der Wendepunkt der Kurve entspricht der Methanolbenetzbarkeit. Figur 1 zeigt eine typische Kurve für eine erfindungsgemäße Zusammensetzung, gekennzeichnet als Quadrat, im Vergleich zu einer mit einem Polydimethysiloxan hydrophobierten Kieselsäure, nämlich AEROSIL^{®} R202, Evonik Industries, gekennzeichnet als Kreis. Dabei stellt die x-Achse den Methanolgehalt in Vol.-% und die y-Achse das Sedimentvolumen in % dar.

Die nach dem erfindungsgemäßen Verfahren hergestellte Zusammensetzung und wenigstens ein Organopolysiloxan kann Bestandteil eines Silikonkautschukes sein . Bei dem Organopolysiloxan handelt es sich bevorzugt um Verbindungen der allgemeinen Formel AₘSiR₃₋ₘ-O-[SiR₂O]ₙ-SiR₃₋ₘ-Aₘ mit
R = Alkyl, Alkoxy-, Aryl-, Oxim-, Acetoxy-, Alkenylreste, mit jeweils 1 bis 50 Kohlenstoffatomen, unsubstituiert oder mit O, S, F, Cl, Br, I substituiert,
A = H, OH, Cl, Br, Alkenyl, Acetoxy-, Amino-, Aminoxy-, Oxim-, Alkoxy-, Amido-, Alkenyloxy-, Acryloxy-, oder Phosphatresten, wobei die organischen Reste bis zu 20 Kohlenstoffatome tragen können, jeweils gleich oder verschieden.
m = 0, 1 ,2 ,3; n = 100 - 15000.

Bevorzugt können Organopolysiloxane der Formel H-Si(CH₃)₂O-[(CH₃)₂Si-O]ₙ-Si(CH₃)₂-H), HO-Si(CH₃)₂O-[(CH₃)₂Si-O]ₙ-Si(CH₃)₂-OH), Si(CH₃)₃O-[(CH₃)₂Si-O]ₙ-Si(CH₃)₃ oder
(CH₂=CH)-Si(CH₃)₂O-[(CH₃)₂Si-O]ₙ-Si(CH₃)₂-(CH=CH₂), eingesetzt werden.
Die gemäß der Erfindung eingesetzten Organopolysiloxane weisen bevorzugt eine Visksosität von 10⁵ bis 5x10⁷ mPas bei 20°C, besondes bevorzugt 10⁶ bis 10⁷ mPas bei 20°C auf.

Beispielhaft sei Rhodorsil^{®} Gomme 751, Bluestar Silicones, CAS-Nr. 68083-18-1, genannt.

Bevorzugt beträgt der Anteil an erfindungsgemäßer Zubereitung im Silikonkautschuk 0,5 bis 60 Gew.-%, besonders bevorzugt 3% bis 40 Gew.-%, ganz besonders bevorzugt 10 bis 30 Gew.-%.

Der Silikonkautschuk kann weiterhin die dem Fachmann bekannten Mittel, wie Vernetzungsmittel, Vernetzungskatalysatoren, Quarzmehl, Kaolin, Schichtsilikate, Tonmineralien, Diatomeenerde, Zikoniumsilikat und Calciumcarbonat, hydrophile Kieselsäure, Polyvinylchloridpulver, Organopolysiloxanharze, Glasfasern und organische Pigmente, lösliche Farbstoffe, Duftstoffe, Korrosionsinhibitoren, Fungizide, Bakterizide oder Weichmacher enthalten.

Ein weiterer Gegenstand der Erfindung ist ein Verfahren zur Herstellung eines Silikonkautschukes umfassend die Schritte
1) Herstellen einer Zusammensetzung, die wenigstens eine oberflächenmodifizierte Kieselsäure enthält, indem man
   a) eine hydrophile Kieselsäure mit einer BET-Oberfläche von 150 bis 400 m²/g, bevorzugt 180 bis 350 m²/g, mit
   b) 5 bis 40, bevorzugt 10 bis 20 Gewichtsanteilen pro 100 Gewichtsanteilen hydrophile Kieselsäure, eines α,ω-hydroxyterminierten Oligodimethylsiloxanes mit einem mittleren Molekulargewicht von 200 - 800 g/mol, bevorzugt 300-500 g/mol, zunächst in Kontakt bringt,
   c) wobei das Inkontaktbringen bei Temperaturen von -10°C bis 50°C erfolgt und
   d) nachfolgend das Reaktionsgemisch wenigstens 3 Tage, bevorzugt 1 Woche bis 1 Jahr, bei Temperaturen von -10°C bis 50°C, belässt,
2) Vermischen der Zusammensetzung bei 15 bis 25°C mit einem Organopolysiloxan.

Für Schritt 1 sollen die gleichen bevorzugten Ausführungsformen bezüglich Inkontaktbringen, Atmosphäre, Herkunft und BET-Oberfläche der hydrophilen Kieselsäure und dynamische Viskosität des α,ω-hydroxyterminierten Oligodimethylsiloxanes gelten, wie bei der Herstellung der erfindungsgemäßen Komposition genannten. Schritt 2 wird mit dem Fachmann bekannten Mischaggregaten durchgeführt.

### Beispiele

### Einsatzstoffe

Als hydrophile Kieselsäure wird eine pyrogen hergestellte Kieselsäure mit einer BET-Oberfläche von 255 m²/g eingesetzt.

α,ω-hydroxyterminiertes Oligodimethylsiloxan 1: 203D Polydimethyl Siloxanediol (Viskosität ≥30mm²/s, mittleres Molekulargewicht 300 bis 500 g/mol). α,ω-hydroxyterminiertes Oligodimethylsiloxan 2: 203 Polydimethyl Siloxanediol; (Viskosität ≤30mm²/s, mittleres Molekulargewicht 300 bis 400 g/mol).
Beispiel 1: 15 Gewichtsanteile α,ω-hydroxyterminiertes Oligodimethylsiloxan 1 werden bei 20°C in einer Stickstoffatmosphäre in einen Massenstrom von 100 Gewichtsanteilen hydrophiler Kieselsäure verdüst. Das Gemisch wird bei 20°C fluidisiert, und anschließend bei dieser Temperatur in Gegenwart von Luft 1 Woche gelagert.
   Die erhaltene Zusammensetzung weist folgende Eigenschaften auf: BET-Oberfläche 160 m²/g, C-Gehalt 4,4 Gew.-%, Methanolbenetzbarkeit 10%, Trockenverlust 1,1 Gew.-% und Glühverlust 4,0 Gew.-%.
Beispiel 2: Analog Beispiel 1, jedoch erfolgt die Lagerung über einen Zeitraum von 4 Wochen.
   Die erhaltene Zusammensetzung weist folgende Eigenschaften auf: BET-Oberfläche 160 m²/g, C-Gehalt 4,2 Gew.-%, Methanolbenetzbarkeit 48 %, Trockenverlust 0,9 Gew.-% und Glühverlust 4,0 Gew.-%.
Beispiel 3: Analog Beispiel 1, jedoch wird α,ω-hydroxyterminiertes Oligodimethylsiloxan 2 anstelle von 1 eingesetzt und die Lagerung über einen Zeitraum von 15 Wochen.
Beispiel 4: Analog Beispiel 3, jedoch erfolgt die Lagerung über einen Zeitraum von 26 Monaten.
Beispiel 5: Analog Beispiel 1, jedoch erfolgt die Lagerung über einen Zeitraum von 8 Monaten.
Beispiel 6 (Vergleichsbeispiel): 375 g/h α,ω-hydroxyterminiertes Oligodimethylsiloxan 1 werden in flüssiger Form bei 20°C in einer Stickstoffatmosphäre in einen Massenstrom von 2500 g/h Kieselsäure verdüst. Das Gemisch wird bei 20°C über einen Zeitraum von 0,25 Stunden mittels Rühren fluidisiert, und anschließend 3 Stunden in einem Luftstrom bei 270°C behandelt. Das erhaltene Produkt weist folgende Eigenschaften auf: BET-Oberfläche 131 m²/g, C-Gehalt 4,2 Gew.-%, Methanolbenetzbarkeit 65 %, Trockenverlust 0,2 Gew.-% und Glühverlust 2,5 Gew.-%.
Beispiel 7 (Vergleichsbeispiel): Als Vergleichsbeispiel dient AEROSIL^{®} R202, Evonik Industries. Dieses Produkt wird erhalten durch Reaktion von AEROSIL^{®} 200, Evonik Industries mit einem Polydimethylsiloxan. Es weist folgende Spezifikation auf: BET-Oberfläche 100 ± 20 m²/g, C-Gehalt 3,5 - 5 Gew.-%, und einen Trockenverlust von <0.5 Gew.-%. Die Methanolbenetzbarkeit eines Musters wurde zu 70 % bestimmt.

**Tabelle 1: Spektroskopische Daten**

| Beispiel | **1** | **2** | **3** | **4** | **5** | **6^{a)}** | **7^{a)}** |
|---|---|---|---|---|---|---|---|
| D/Q (²⁹Si-HPDEC-NMR) | 34:66 | 33:67 | 26:74 | n.b. | n.b. | 46:54 | 54:46 |
| E₃₆₆₀/E₁₈₇₀ (IR) | 1,53 | 1,69 | 1,57 | 1,57 | 1,88 | 0,90 | 0,91 |
| E₃₅₀₀/E₁₈₇₀ (IR) | 2,80 | 2,92 | 2,71 | 2,50 | 3,25 | 0,60 | 0,63 |

| | | | | | | | |
|---|---|---|---|---|---|---|---|
| a) Vergleichsbeispiel | | | | | | | |

Im Gegensatz zu WO2009/077437 weist die nach dem erfindungsgemäßen Verfahren hergestellte Zusammensetzung keine T-Gruppen auf.

Im Gegensatz zu den Vergleichsbeispielen 6 und 7 sind in den nach dem erfindungsgemäßen Verfahren hergestellten Zusammensetzungen die Anteile der D-Gruppen geringer, die der Q-Gruppen höher.

In der Regel zeigen die ²⁹Si-NMR-Spektren der nach dem erfindungsgemäßen Verfahren hergestellte Zubereitungen nennenswerte Anteile, 15 bis 25 FI.-% bezogen auf die Summe von D3 und D4-Gruppen. Die hydrophobierten Kieselsäuren der Beispiele 6 und 7 zeigen keine D3-Gruppen.
Auch die IR-Spektren der nach dem erfindungsgemäßen Verfahren hergestellten Zusammensetzungen der Beispiele 1 bis 5 weisen deutliche Unterschiede zu den Vergleichsbeispielen 6 und 7 auf.

Einarbeitungszeit in unvernetzten Silikonkautschuk: 100 Teile Rhodorsil^{®} Gomme 751, Bluestar Silicones, CAS-Nr. 68083-18-1 und 40 Teile der Zusammensetzung aus Beispiel 1 werden in einem Laborkneter LUK-2,5 der Firma Werner und Pfleiderer bei Raumtemperatur, 20 bis 25°C, vermischt. Dabei wird die Zusammensetzung in drei Portionen, nämlich zu 60, 25 und 15 Gew.-% der Gesamtmenge, zugegeben, wobei die nachfolgende Zugabe dann erfolgt, wenn die Zusammensetzung nach visueller Beurteilung im unvernetzten Silikonkautschuk aufgenommen ist.

Analog wird mit den Zusammensetzungen der Beispiel 3 und 7 verfahren. Tabelle 2 gibt die Einarbeitungszeiten wieder. Dabei zeigt sich, dass durch die nach dem erfindungsgemäßen Verfahren hergestellten Zusammensetzungen aus Beispiel 1 und 3 die Einarbeitungszeit gegenüber der nicht nach dem erfindungsgemäßen Verfahren hergestellten Zusammensetzung aus Beispiel 8 deutlich verringert werden kann.

**Tabelle 2: Einarbeitungszeiten**

| Zusammensetzung aus Beispiel | Einarbeitungszeit [min] |
|---|---|
| 1 | 47 |
| 3 | 39 |
| 7 | 77 |

Durch die verkürzte Einarbeitungszeit werden die mechanischen und optischen Eigenschaften der vernetzten Silikonkautschuke nicht negativ beeinflusst.

## Patentansprüche

1. Verfahren zur Herstellung einer wenigstens eine oberflächenmodifizierte Kieselsäure enthaltenden Zusammensetzung, **dadurch gekennzeichnet, dass** man
a) eine hydrophile Kieselsäure mit
b) 5 bis 40 Gewichtsanteilen pro 100 Gewichtsanteilen hydrophile Kieselsäure, eines α,ω-hydroxyterminierten Oligodimethylsiloxanes mit einem mittleren Molekulargewicht von 166 bis 800 g/mol zunächst in Kontakt bringt, wobei das Inkontaktbringen bei Temperaturen von -10°C bis 50°C erfolgt und
c) nachfolgend das so erhaltene Reaktionsgemisch wenigstens 3 Tage bei Temperaturen von -10°C bis 50°C belässt.

2. Verfahren nach Anspruch 1, **dadurch gekennzeichnet, dass** das Inkontaktbringen unter Inertgasatmosphäre erfolgt.

3. Verfahren nach den Ansprüchen 1 oder 2, **dadurch gekennzeichnet, dass** man die Atmosphäre bei der man das Reaktionsgemisch für wenigstens 3 Tage belässt, eine sauerstoffhaltige Atmosphäre ist.

4. Verfahren nach den Ansprüchen 1 bis 3, **dadurch gekennzeichnet, dass** die hydrophile Kieselsäure eine pyrogene Kieselsäure ist.

5. Verfahren nach Anspruch 1 bis 4, **dadurch gekennzeichnet, dass** die BET-Oberfläche der hydrophilen Kieselsäure 150 bis 400 m²/g ist.

6. Verfahren nach den Ansprüchen 1 bis 5, **dadurch gekennzeichnet, dass** das α,ω-hydroxyterminierte Polydimethylsiloxan eine dynamische Viskosität von weniger als 50 mPas bei 20°C besitzt.

7. Verfahren zur Herstellung eines Silikonkautschukes umfassend die Schritte
1) Herstellen einer Zusammensetzung, die wenigstens eine oberflächenmodifizierte Kieselsäure enthält, indem man
a) eine hydrophile Kieselsäure mit einer BET-Oberfläche von 150 bis 400 m²/g, bevorzugt 180 bis 350 m²/g, mit
b) 5 bis 40, bevorzugt 10 bis 20 Gewichtsanteilen pro 100 Gewichtsanteilen hydrophile Kieselsäure, eines α,ω-hydroxyterminierten Oligodimethylsiloxanes mit einem mittleren Molekulargewicht von 200 - 800 g/mol, bevorzugt 300-500 g/mol, zunächst in Kontakt bringt,
c) wobei das Inkontaktbringen bei Temperaturen von -10°C bis 50°C erfolgt und
d) nachfolgend das Reaktionsgemisch wenigstens 3 Tage bei Temperaturen von -10°C bis 50°C, belässt,
2) Vermischen der Zusammensetzung bei 15 bis 25°C mit einer einen Silikonkautschuk, bevorzugt ein Organopolysiloxan, enthaltenden Zubereitung.

## Claims

1. Process for producing a composition comprising at least one surface-modified silica, **characterized in that**
a) a hydrophilic silica
b) is first brought into contact with from 5 to 40 parts by weight per 100 parts by weight of hydrophilic silica of an α,ω-hydroxy-terminated oligodimethylsiloxane with an average molar mass of from 166 to 800 g/mol, where the contact takes place at temperatures of from - 10°C to 50°C, and
c) then allowing the resultant reaction mixture to stand for at least 3 days at temperatures of from -10°C to 50°C.

2. Process according to Claim 1, **characterized in that** the contact takes place under an inert gas atmosphere.

3. Process according to Claim 1 or 2, **characterized in that**
the atmosphere in which the reaction mixture is allowed to stand for at least 3 days is an oxygen-containing atmosphere.

4. Process according to Claims 1 to 3, **characterized in that**
the hydrophilic silica is a fumed silica.

5. Process according to any of Claims 1 to 4, **characterized in that**
the BET surface area of the hydrophilic silica is from 150 to 400 m²/g.

6. Process according to Claims 1 to 5, **characterized in that**
the dynamic viscosity of the α,ω-hydroxy-terminated polydimethylsiloxane is less than 50 mPas at 20°C.

7. Process for producing a silicone rubber comprising the steps of
1) producing a composition which comprises at least one surface-modified silica, in that
a)a hydrophilic silica with a BET surface area of from 150 to 400 m²/g, preferably from 180 to 350 m²/g,
b)is first brought into contact with from 5 to 40 parts by weight, preferably from 10 to 20 parts by weight, per 100 parts by weight of hydrophilic silica, of an α,ω-hydroxy-terminated oligodimethylsiloxane with an average molar mass of from 200 to 800 g/mol, preferably from 300 to 500 g/mol,
c)where the contact takes place at temperatures of from -10°C to 50°C, and
d)then allowing the reaction mixture to stand for at least 3 days at temperatures of from -10°C to 50°C,
2) mixing the composition at from 15 to 25°C with a preparation comprising a silicone rubber, preferably an organopolysiloxane.

## Revendications

1. Procédé pour la préparation d'une composition contenant au moins une silice modifiée en surface, **caractérisé en ce que**
a) on met d'abord en contact une silice hydrophile avec
b) 5 à 40 parties en poids, par 100 parties en poids de silice hydrophile, d'un oligodiméthylsiloxane α,ω-terminé par hydroxy présentant un poids moléculaire moyen de 166 à 800 g/mole, la mise en contact ayant lieu à des températures de -10°C à 50°C et
c) on laisse ensuite le mélange réactionnel ainsi obtenu pendant au moins 3 jours à des températures de -10°C à 50°C.

2. Procédé selon la revendication 1, **caractérisé en ce que** la mise en contact a lieu sous une atmosphère de gaz inerte.

3. Procédé selon les revendications 1 ou 2, **caractérisé en ce que** l'atmosphère dans laquelle on laisse le mélange réactionnel pendant au moins 3 jours est une atmosphère contenant de l'oxygène.

4. Procédé selon les revendications 1 à 3, **caractérisé en ce que** la silice hydrophile est une silice pyrogène.

5. Procédé selon la revendication 1 à 4, **caractérisé en ce que** la surface BET de la silice hydrophile est de 150 à 400 m²/g.

6. Procédé selon les revendications 1 à 5, **caractérisé en ce que** le polydiméthylsiloxane α,ω-terminé par hydroxy présente une viscosité dynamique inférieure à 50 mPa.s à 20°C.

7. Procédé pour la préparation d'un caoutchouc de silicone, comprenant les étapes consistant à
1) préparer une composition qui contient au moins une silice modifiée en surface, en ce que
a) on met d'abord en contact une silice hydrophile présentant une surface BET de 150 à 400 m²/g, de préférence de 180 à 350 m²/g, avec
b) 5 à 40, de préférence 10 à 20, parties en poids, par 100 parties en poids de silice hydrophile, d'un oligodiméthylsiloxane α,ω-terminé par hydroxy présentant un poids moléculaire moyen de 200-800 g/mole, de préférence de 300-500 g/mole,
c) la mise en contact ayant lieu à des températures de -10°C à 50°C et
d) on laisse ensuite le mélange réactionnel pendant au moins 3 jours à des températures de -10°C à 50°C,
2) mélanger la composition à 15 jusqu'à 25°C avec une composition contenant un caoutchouc de silicone, de préférence un organopolysiloxane.
